# EUROPEAN PATENT APPLICATION

(11) **EP 3 829 231 A1**
(43) Date of publication of application: **02.06.2021**
(21) Application number: 18927981.3
(22) Date of filing: 26.07.2018
(51) Int. Cl.: H04W 72/02, H04W 4/40, H04W 74/02, H04W 92/18

(54) **USER DEVICE**

(71) Applicant: NTT DOCOMO, INC., Tokyo 100-6150 (JP)
(72) Inventor: OSAWA, Ryosuke, Tokyo 100-6150 (JP); WANG, Huan, Beijing, 100190 (CN); ZHENG, Xufei, Beijing, 100190 (CN); HOU, Xiaolin, Beijing, 100190 (CN); HE, Xinxin, Beijing 100876 (CN); LV, Jie, Beijing 100876 (CN); ZHAO, Jiaqi, Beijing 100876 (CN); LUO, Tao, Beijing 100876 (CN)
(74) Representative: Hoffmann Eitle
(86) International application number: PCT/JP2018/028159
(87) International publication number: WO 2020/021690

(57) **Abstract**

A user apparatus performs inter-terminal direct communication, and comprises: a receiving unit that performs sensing in a predetermined period located in a beginning portion in a time domain of resource units included in a resource selection window; a controlling unit that selects any of the resource units included in the resource selection window based on a result of the sensing; and a transmitting unit that transmits a signal to another user apparatus using the selected resource unit.

## Description

### TECHNICAL FIELD

The present invention relates to a user apparatus in a radio communication system.

### BACKGROUND ART

In LTE (Long Term Evolution) and successor systems of LTE (for example, LTE-A (LTE Advanced), NR (New Radio, also referred to as 5G)), D2D (Device to Device) techniques in which user apparatuses directly communicate with each other without via a radio base station have been studied (for example, Non-Patent Document 1).

D2D decreases traffic between a user apparatus and a base station apparatus, and enables communication between user apparatuses even if a base station apparatus is not communicable such as at the time of disaster. Although D2D is called "sidelink" in 3GPP (3rd Generation Partnership Project), D2D that is a more general term is used in this specification. However, the sidelink may be also used as appropriate in the description of the embodiment set forth below.

D2D is roughly classified into D2D discovery for discovering other communicable user apparatuses and D2D communication (also referred to as D2D direct communication, inter-terminal direct communication, or the like) for direct communication between user apparatuses. Hereinafter, when D2D communication, D2D discovery, and the like are not distinguished from each other in particular, they are simply called D2D. A signal transmitted or received in D2D is called a D2D signal. Various use cases of services related to V2X (Vehicle to Everything) in NR have been studied (for example, Non-Patent Document 2).

### RELATED-ART DOCUMENTS

### Non-Patent Document

Non-Patent Document 1: 3GPP TS 36.211 V15.2.0 (2018-06)
Non-Patent Document 2: 3GPP TR 22.886 V15.1.0 (2017-03)

### SUMMARY OF THE INVENTION

### PROBLEM TO BE SOLVED BY THE INVENTION

If in V2X, a user apparatus is present especially outside coverage, the user apparatus randomly selects a resource autonomously. However, reliability of transmission may decrease due to resource conflicts.

The present invention was made in light of the above, and it is an object to mitigate resource conflicts in inter-terminal direct communication.

### MEANS TO SOLVE THE PROBLEM

According to a technique of the present disclosure, there is provided a user apparatus performing inter-terminal direct communication, comprising: a receiving unit that performs sensing in a predetermined period located in a beginning portion in a time domain of resource units included in a resource selection window; a controlling unit that selects any of the resource units included in the resource selection window based on a result of the sensing; and a transmitting unit that transmits a signal (control signal, data, or the like) to another user apparatus using the selected resource unit.

### ADVANTAGE OF THE INVENTION

According to the technique of the present disclosure, resource conflicts in inter-terminal direct communication can be mitigated.

### BRIEF DESCRIPTION OF THE DRAWINGS

Fig. 1 is a diagram for explaining V2X.
Fig. 2 is a diagram illustrating an example of a radio communication system in an embodiment of the present invention.
Fig. 3 is a flow chart for explaining a transmission operation in an embodiment of the present invention.
Fig. 4 is a diagram illustrating configuration of resources in an embodiment of the present invention.
Fig. 5 is a diagram illustrating a resource selection window in an embodiment of the present invention.
Fig. 6 is a diagram illustrating an example (1) of resource exclusion in an embodiment of the present invention.
Fig. 7 is a diagram illustrating an example (2) of resource exclusion in an embodiment of the present invention.
Fig. 8 is a diagram illustrating an example of sensing by a plurality of user apparatuses in an embodiment of the present invention.
Fig. 9 is a diagram illustrating an example of resource exclusion by sensing in an embodiment of the present invention.
Fig. 10 is a diagram illustrating an example of transmission timing in an embodiment of the present invention.
Fig. 11 is a diagram illustrating an example of sensing to a PSCCH in an embodiment of the present invention.
Fig. 12 is a diagram illustrating an example of sensing to a PSCCH and a PSSCH in an embodiment of the present invention.
Fig. 13 is a diagram illustrating an example of a functional configuration of a base station apparatus 10 in an embodiment of the present invention.
Fig. 14 is a diagram illustrating an example of a functional configuration of a user apparatus 20 in an embodiment of the present invention.
Fig. 15 is a diagram illustrating an example of a hardware configuration of a base station apparatus 10 and a user apparatus 20 in an embodiment of the present invention.

### Mode for Carrying Out the Invention

Hereinafter, embodiments of the present invention will be described with reference to the accompanying drawings. The embodiments described below are only examples and embodiments to which the present invention is applied are not limited to the following embodiments.

For operations of a radio communication system according to the embodiments of the present invention, existing techniques are used as appropriate. Although such an existing technique is, for example, existing LTE, the existing techniques are not limited to existing LTE. The term "LTE" as used in this specification has a broad meaning including LTE-Advanced and schemes after LTE-Advanced (for example, NR) unless otherwise specified.

In the embodiments of the present invention, a duplex scheme may be a TDD (Time Division Duplex) scheme, an FDD (Frequency Division Duplex) scheme, or another (for example, Flexible Duplex or the like) scheme different from these schemes.

In the following description, a method of transmitting a signal using a transmission beam may be digital beamforming for transmitting the signal multiplied by a precoding vector (precoded with the precoding vector) or analog beamforming for implementing beamforming using a variable phase shifter within an RF (Radio Frequency) circuit. Similarly, a method of receiving a signal using a reception beam may be digital beamforming for multiplying the received signal by a predetermined weight vector or may be analog beamforming for embodying beamforming using a variable phase shifter within an RF circuit. Hybrid beamforming in which the digital beamforming and the analog beamforming are combined may be applied. Transmitting a signal using a transmission beam may mean transmitting the signal via a particular antenna port. Similarly, receiving a signal using a reception beam may mean receiving the signal via a particular antenna port. An antenna port refers to the logical antenna port or physical antenna port defined in the 3GPP standard. The above precoding or beamforming may be called a precoder, spatial domain filter, or the like.

A method of forming a transmission beam and reception beam is not limited to the above method. For example, in a base station apparatus 10 and a user apparatus 20 each including a plurality of antennas, a method of changing an angle of each antenna may be used, a method in which a method of using a precoding vector and a method of changing an angle of each antenna are combined may be used, a method of switching and using different antenna panels may be used, a method of using a combination of a plurality of antenna panels may be used, or any other method may be used. Also, for example, a plurality of transmission beams different from each other may be used in a high frequency band. Using a plurality of transmission beams is referred to as multi-beam operation and using one transmission beam is referred to as single-beam operation.

In the embodiments of the present invention, the phrase "a radio parameter or the like is 'configured' may mean that a predetermined value is pre-configured, or mean that a radio parameter indicated by a base station apparatus 10 or a user apparatus 20 is configured or set.

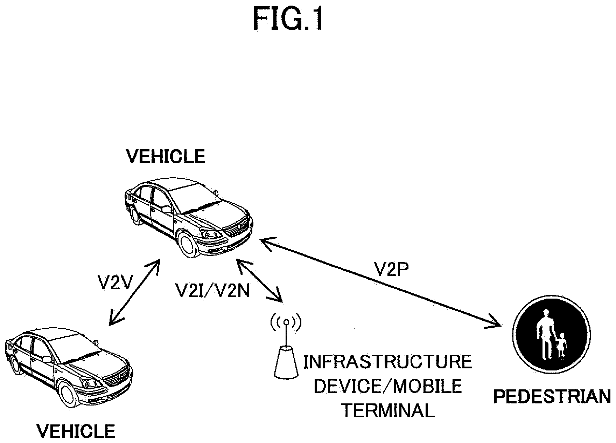

Fig. 1 is a diagram for explaining V2X. In 3GPP, studies are underway to implement V2X (Vehicle to Everything) or eV2X (enhanced V2X) by extending D2D functionality, and technical specifications are being developed. As illustrated in Fig. 1, V2X is a part of ITS (Intelligent Transport Systems), and is a general term of V2V (Vehicle to Vehicle) meaning a communication form in which communication is performed between vehicles; V2I (Vehicle to Infrastructure) meaning a communication form in which communication is performed between a vehicle and an RSU (Road-Side Unit) provided on a road side; V2N (Vehicle to Nomadic device) meaning a communication form in which communication is performed between a vehicle and a mobile terminal that a driver carries; and V2P (Vehicle to Pedestrian) meaning a communication form in which communication is performed between a vehicle and a mobile terminal that a pedestrian carries.

In 3GPP, V2X with inter-terminal communication and cellular communication of LTE or NR has been studied. For V2X of LTE or NR, it is presumed that study that is not limited to the 3GPP specification will be advanced. For example, it is presumed that securing interoperability, cost reduction with implementation of a higher layer, a method of combining, or switching between, a plurality of RATs (Radio Access Technologies), addressing a regulation in each country, methods of data acquisition, delivery, database management, and utilization of a V2X platform of LTE or NR, and the like will be studied.

In the embodiments of the present invention, a form in which a communication device is mounted on a vehicle is assumed mainly, but the embodiments of the present invention are not limited to the form. For example, the communication device may be a terminal that a person carries, the communication device may be a device mounted on a drone or aircraft, or the communication device may be a base station, an RSU, a relay station (relay node) or the like.

SL (Sidelink) may be distinguished from UL (Uplink) or DL (Downlink) based on any or a combination of the following items 1) to 4). SL may be called another term.
1) Time domain resource mapping.
2) Frequency domain resource mapping.
3) A synchronization signal (including an SLSS (Sidelink Synchronization Signal)) to reference.
4) A reference signal used for path loss measurement for transmission power control.

With respect to OFDM (Orthogonal Frequency Division Multiplexing) of SL or UL, any of CP-OFDM (Cyclic-Prefix OFDM), DFT-S-OFDM (Discrete Fourier Transform - Spread - OFDM), OFDM without transform precoding, and OFDM with transform precoding may be applied.

In SL of LTE, with respect to resource allocation of SL to a user apparatus 20, Mode 3 and Mode 4 are defined. In Mode 3, a transmit resource is dynamically allocated by DCI (Downlink Control Information) transmitted from a base station apparatus 10 to a user apparatus 20. In Mode 3, SPS (Semi Persistent Scheduling) can also be performed. In Mode 4, a user apparatus 20 autonomously selects a transmit resource from a resource pool.

In general, MAC (Media Access Control) configurations of an ad-hoc network such as V2X include three types: distributed; semi-distributed; and centralized.

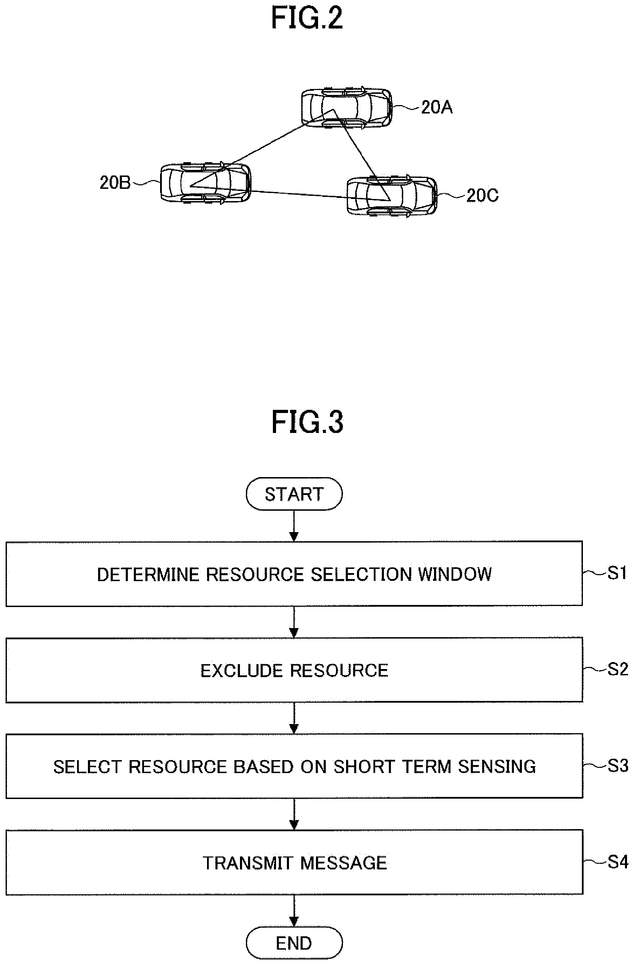

Fig. 2 is a diagram illustrating an example of a radio communication system in an embodiment of the present invention. In Fig. 2, a configuration example of a distributed type MAC including three user apparatuses 20A, 20B, and 20C is illustrated. In a distributed type MAC, there is no coordinator that performs resource allocation. For example, 802.11p, LTE Sidelink transmission mode-4 or the like corresponds to the distributed type MAC. Disadvantages of the distributed type MAC include the following. In LTE-V (Vehicle) mode 4, periodic traffic is assumed and it is not suited for aperiodic traffic.

In a centralized type MAC, a base station apparatus 10 performs resource allocation as a coordinator. For example, LTE Sidelink transmission mode-3 or the like corresponds to the centralized type MAC. Disadvantages of the centralized type MAC include the following. Operation outside coverage cannot be performed. A base station apparatus is subjected to excessive overhead regarding an SR (Scheduling Request) and a BSR (Buffer Status Report). For example, if many UE (User Equipment)-mounted vehicles transmit SRs and BSRs, an overhead of about 10ms is predicted. A network needs to support a low latency SR procedure. A gNB or eNB needs to provide HRLLC (High-Reliable and Low Latency Communications) support to all coverages.

A cluster in a semi-distributed type MAC is a group constituted of a user apparatus 20 that is a header and a user apparatus 20 that is a member. In a semi-distributed type MAC, a user apparatus 20 performs resource allocation as a coordinator. In the semi-distributed type MAC, a plurality of user apparatuses 20 are divided into clusters each constituted of one or more user apparatuses 20, and scheduling is performed from a user apparatus 20 that is a header of a cluster to a user apparatus 20 that is a member.

In an eV2X service, it is assumed that non-periodic traffic is a typical type of traffic. Further, there is need for considering both cases within coverage and outside coverage. Therefore, at least a distributed type MAC or a semi-distributed type MAC is supported.

Here, especially in case of outside coverage, a user apparatus 20 needs to perform autonomous resource selection for non-periodic traffic. Random resource selection is used for the non-periodic traffic. However, reliability of transmission decreases due to resource conflicts. Therefore, it is important to decrease resource conflicts.

Fig. 3 is a flow chart for explaining a transmission operation in an embodiment of the present invention. Resource conflicts are decreased by introducing resource selection based on short term sensing. For example, the short term sensing is performed immediately before the resource selection. With reference to Fig. 3, an operation of a user apparatus 20 selecting or re-selecting a resource and transmitting a new transmission signal if the new transmission signal occurs is described.

In step S1, a user apparatus 20 performs determination of a resource selection window. Details of the resource selection window will be described below. Then, the user apparatus 20 excludes one or more resources that are not used among the resource selection window (step S2). Performing step S2 is optional, and step S2 may be performed or may not be performed.

In step S3, the user apparatus 20 performs resource selection based on short term sensing in the resource selection window. Details of the short term sensing will be described below. Then, the user apparatus 20 transmits a message using the selected resource.

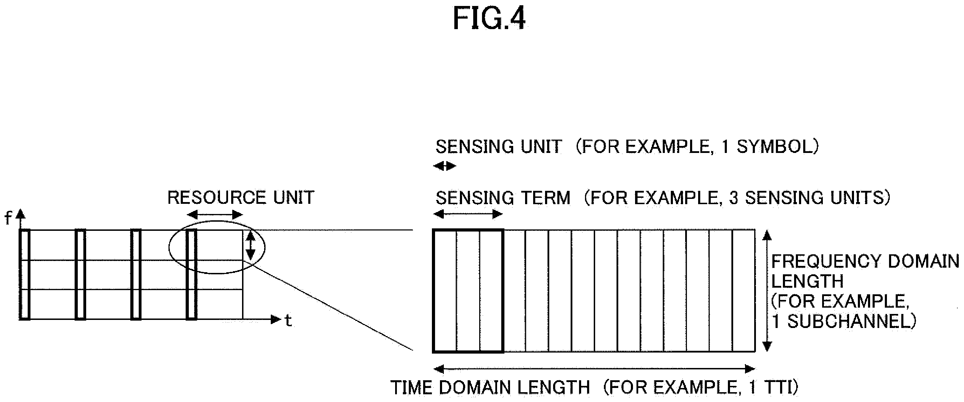

Fig. 4 is a diagram illustrating configuration of resources in an embodiment of the present invention. As illustrated in Fig. 4, a resource unit including a sensing term is configured. In the left side of Fig. 4, the horizontal axis corresponds to the time domain and the vertical axis corresponds to the frequency domain, and twelve resource units are illustrated. That is, resource units are multiplexed in the time domain and/or the frequency domain. A size of a resource unit is configured or pre-defined. That is, the frequency domain may be specified with one or more subchannels or one or more PRBs (Physical Resource Blocks), and/or the time domain may be specified with one or more TTIs (Transmission Time Intervals), one or more symbols, one or more subframes, or one or more slots.

The right side of Fig. 4 is an enlarged view of one resource unit. As an example, a resource unit with a time domain length of one TTI corresponding to 14 OFDM symbols and a frequency domain length of 1 subchannel is illustrated. A sensing unit is configured or pre-defined in a resource unit. Sensing is performed for each sensing unit. For example, a sensing unit may be one OFDM symbol or a plurality of OFDM symbols. A sensing term is a period in which sensing is performed, and is configured or pre-defined in the beginning portion of a resource unit. Length of a sensing term is configured or pre-defined such that it corresponds to one or more sensing units. In the example illustrated in Fig. 4, the sensing term corresponds to three (3) sensing units.

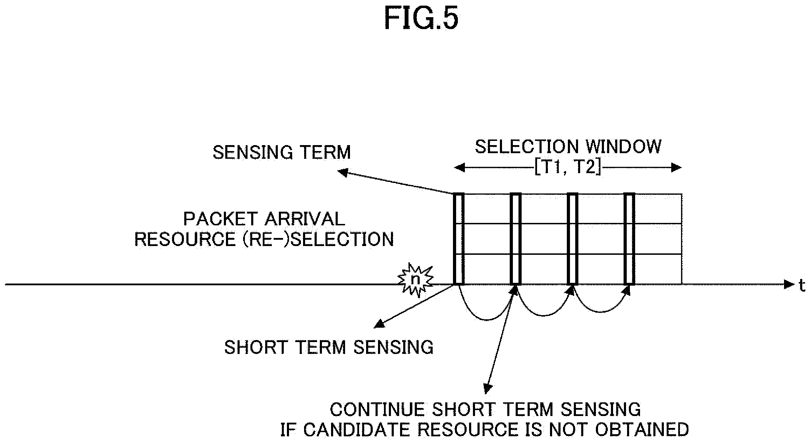

Fig. 5 is a diagram illustrating a resource selection window in an embodiment of the present invention. As illustrated in Fig. 5, at an index n of the time domain, a signal to transmit occurs and resource selection is triggered. The index n of the time domain corresponds to the n^{th} TTI, subframe, or slot, for example. As illustrated in Fig. 5, a user apparatus 20 performs resource selection in a resource selection window of a section [n + T1, n + T2]. As a procedure of determining a resource selection window, a procedure of LTE release 14 V2X may be used, for example.

The user apparatus 20 starts resource selection based on short term sensing from the top of the resource selection window. If the user apparatus 20 cannot obtain a usable resource candidate in the current resource unit, TTI, subframe, or slot, the user apparatus 20 continues short term sensing in the next resource unit, TTI, subframe, or slot. If a usable resource candidate cannot be obtained, short term sensing is continued until the end of the resource selection window. In Fig. 5, an example in which short term sensing is performed four times in the resource selection window is illustrated.

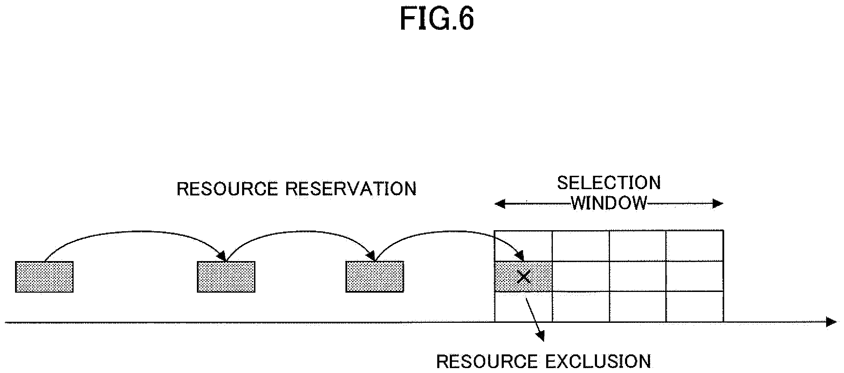

Fig. 6 is a diagram illustrating an example (1) of resource exclusion in an embodiment of the present invention. A user apparatus 20 may exclude a resource unit in a resource selection window from a target of short term sensing if the resource unit is reserved or selected by another user apparatus 20 before starting the short term sensing.

A user apparatus 20 may exclude a resource unit reserved by another neighbor user apparatus 20 from a target of short term sensing. That is, a reserved resource unit for transmission of periodic traffic is excluded from a target of short term sensing. A resource exclusion procedure may be performed based on an RSRP (Reference Signal Received Power), RSRQ (Reference Signal Received Quality), or RSSI (Received Signal Strength Indicator). A value of x is configured or pre-defined such that resources of at least x% of a resource selection window are left as sensing candidates after one or more resources are excluded.

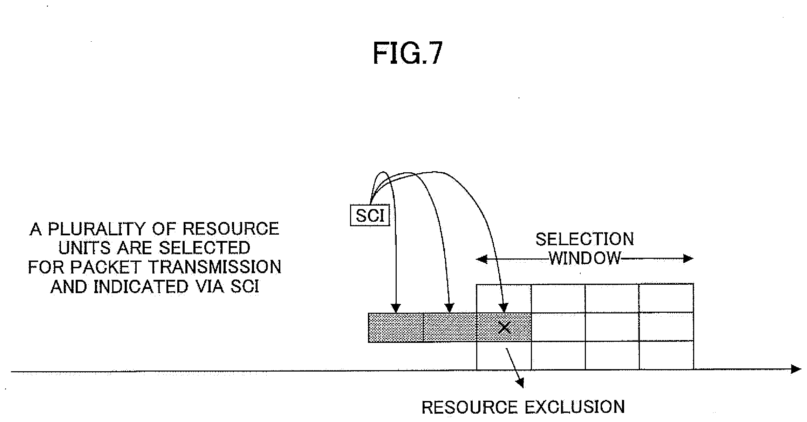

Fig. 7 is a diagram illustrating an example (2) of resource exclusion in an embodiment of the present invention. A user apparatus 20 may exclude a resource unit selected by another neighbor user apparatus 20 from a target of short term sensing. That is, a consecutive resource unit indicated via SCI (Sidelink Control Information) is excluded from a target of short term sensing.

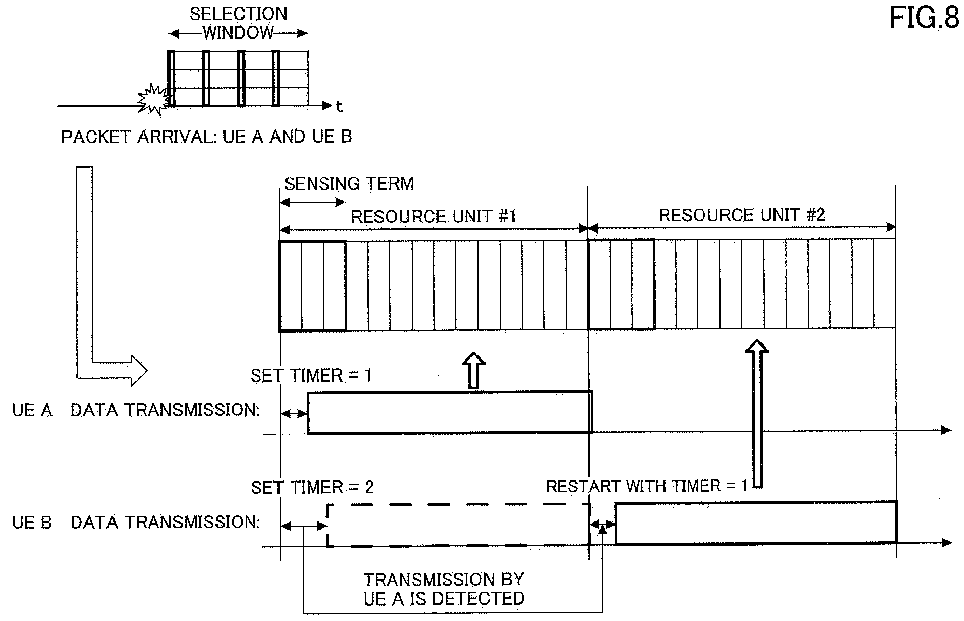

Fig. 8 is a diagram illustrating an example of sensing in an embodiment of the present invention. When a user apparatus 20 performs resource selection, the user apparatus 20 performs sensing in some or all of a sensing term of a sensing unit, and senses whether a certain resource is being used for transmission or not based on a sensing result. Fig. 8 is an example of a data transmission procedure with a resource unit in which time division multiplexing is assumed, and corresponds to a case where a candidate resource used for data transmission is equal to 1 resource unit. Signals to transmit in a UE-A and a UE-B respectively occur, and resources are selected from the same resource selection window.

In performing sensing, a user apparatus 20 uses a sensing timer. The sensing timer determines the number x of sensing units that will be sensing targets. In the sensing timer, a fixed value may be configured or pre-defined. Also, the sensing timer may be selected from a configured or pre-defined range of values. The range of values may be [0, sensing term], and a user apparatus 20 may randomly select a value of the sensing timer from the range of values. The sensing timer may be smaller than the sensing term. The value or range of values of the sensing timer may be determined depending on a priority of a transmission signal. For example, a high PPPP (ProSe Per Packet Priority) may correspond to a smaller sensing timer value. Also, the value or range of values of the sensing timer may be determined depending on density of user apparatuses 20 or density of traffic. For example, a CBR (Channel Busy Ratio) indicating that density of traffic is high may correspond to a larger sensing timer value.

Table 1 is an example in which a sensing timer value is determined based on a CBR and a PPPP.

**Table 1**

| CBR | PPPP | SENSING TIMER VALUE |
|---|---|---|
| 0-0.5 | 1 | 1 |
| | 2 | 2 |
| 0.5-1 | 1 | 3 |
| | 2 | 4 |

In the example shown in Table 1, if the CBR is between 0 and 0.5 and the PPPP is 1, the sensing timer value is 1; if the CBR is between 0 and 0.5 and the PPPP is 2, the sensing timer value is 2; if the CBR is between 0.5 and 1 and the PPPP is 1, the sensing timer value is 3; and if the CBR is between 0.5 and 1 and the PPPP is 2, the sensing timer value is 4.

Table 2 is an example in which a sensing timer value is determined based on a PPPP.

**Table 2**

| PPPP | SENSING TIMER VALUE |
|---|---|
| 1 | 1 |
| 2 | 2 |

In the example shown in Table 2, if the PPPP is 1, the sensing timer value is 1; and if the PPPP is 1, the sensing timer value is 2.

Table 3 is an example in which a sensing timer value is determined based on a CBR.

**Table 3**

| CBR | SENSING TIMER VALUE |
|---|---|
| 0-0.5 | 1 |
| 0.5-1 | 2 |

In the example shown in Table 3, if the CBR is between 0 and 0.5, the sensing timer value is 1; and if the CBR is between 0.5 and 1, the sensing timer value is 2.

As illustrated in Fig. 8, the user apparatus 20 performs short term measurement of an RSRP, RSRQ, or RSSI for each sensing unit to perform short term sensing in 1 resource unit, 1 TTI, 1 slot, or 1 subframe until no candidate resource is present in the current 1 resource unit, TTI, slot, or subframe, or the sensing timer expires from the top sensing unit of a sensing term. The user apparatus 20 decreases the initial value of the sensing timer by 1 each time the user apparatus 20 performs sensing on 1 resource unit. Or, the user apparatus 20 may decrease the initial value of the sensing timer in a resource unit next to a certain resource unit by the number of sensing units in which no signal has been detected among sensing units on which sensing has been performed in the certain resource unit.

Short term measurement may be performed for each resource unit. If a measurement result such as an RSRP, RSRQ, or RSSI of a resource unit exceeds a configured or pre-defined threshold, the user apparatus 20 excludes the resource unit from resource candidates.

If no candidate resource is present in the current resource selection window, resource unit, TTI, slot, radio frame, or subframe by the above resource exclusion, the user apparatus 20 stops or initializes the sensing timer as a configured or pre-defined operation. Subsequently, the user apparatus 20 starts sensing in a new resource selection window, resource unit, TTI, slot, radio frame, or subframe, and restarts or resets the stopped sensing timer. Here, as a configured or pre-defined operation, the value or range of values of the sensing timer may be decreased each time the sensing timer is reset.

If the sensing timer is counted down and becomes 0, the user apparatus 20 selects a candidate resource used for message transmission. If there are two or more candidate resources left, the user apparatus 20 may randomly select a candidate resource used for message transmission. If a candidate resource is not selected in the resource selection window or in allowed delay of signal transmission, as a configured or pre-defined operation, the user apparatus 20 may refrain from performing signal transmission or may select a resource without performing sensing.

As illustrated in Fig. 8, when short term sensing is started in a resource unit #1, the sensing timer value of the UE-A is 1 and the sensing timer value of the UE-B is 2. The UE-A selects the resource unit #1 because no signal is detected by performing sensing on the first sensing unit and the sensing timer becomes 0. Then, the UE-A starts data transmission from the second sensing unit. On the other hand, the UE-B performs sensing on the first resource unit and the second resource unit because the sensing timer at the start of short term sensing is 2. As a result of the sensing, the UE-B detects a signal transmitted by the UE-A in the second sensing unit, and therefore excludes the resource unit #1 from candidates. Then, the UE-B decreases the initial value of the sensing timer to 1, and starts short term sensing in a resource unit #2. The UE-B selects the resource unit #2 because the timer becomes 0 when performing sensing on the first sensing unit. Then, the UE-B starts data transmission from the second sensing unit.

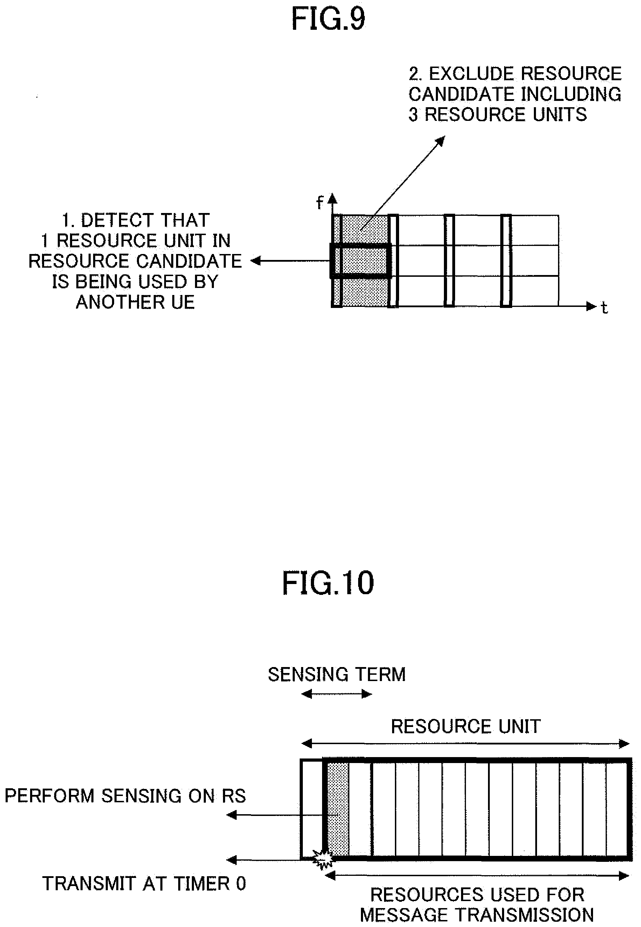

Fig. 9 is a diagram illustrating an example of resource exclusion by sensing in an embodiment of the present invention. A candidate resource includes one or more resource units in 1 TTI, 1 slot, or 1 subframe, and is used for one signal transmission in general. A size of the candidate resource may be specified from a higher layer. Fig. 9 illustrates a case where 3 resource units correspond to a candidate resource. As illustrated in Fig. 9, a user apparatus 20 excludes all 3 resource units included in the candidate resource if the user apparatus 20 detects that any resource unit of the resource units in the candidate resource is being used by another UE.

Note that when signals are transmitted consecutively in a plurality of resource units, TTIs, slots, or subframes, resource selection based on short term sensing may be performed as in the following item 1) or item 2).
1) The resource selection based on short term sensing is performed for each resource unit, TTI, slot, or subframe.
2) The resource selection based on short term sensing is performed only in the first resource unit, TTI, slot, or subframe of the plurality of resource units, TTIs, slots, or subframes. A subsequent resource unit, TTI, slot, or subframe used for transmission is reserved via SCI, for example.

Fig. 10 is a diagram illustrating an example of transmission timing in an embodiment of the present invention. As illustrated in Fig. 10, a user apparatus 20 starts message transmission when a sensing timer is counted down to reach 0. Fig. 10 is an example in which the sensing timer is 1 at the start of short term sensing, and the message transmission is started from a second sensing unit, at which the sensing timer becomes zero (0), in a resource unit.

The message transmission is performed according to a mapping pattern of a configured or pre-defined reference signal and a resource for data. If sensing is configured in a resource unit, a reference signal for sensing is mapped in the first sensing unit overlapping with a resource used for the message transmission as a configured or pre-defined operation. Another user apparatus 20 measures an RSRP, RSRQ, RSSI, or the like of the reference signal for sensing mapped in the first sensing unit overlapping with the resource used for the message transmission to perform sensing. The reference signal for sensing may be configured for each resource unit or for each signal transmission.

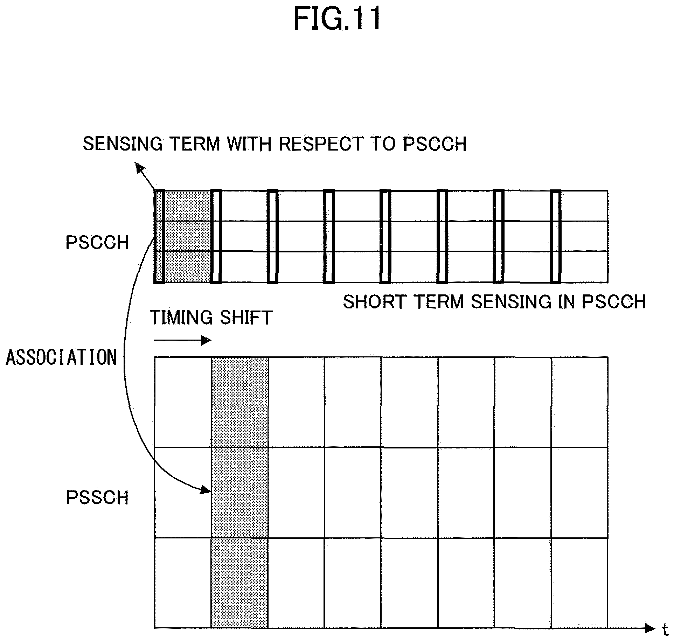

Fig. 11 is a diagram illustrating an example of sensing to a PSCCH in an embodiment of the present invention. Association between a PSCCH (Physical Sidelink Control Channel) and a PSSCH (Physical Sidelink Shared Channel) may be configured or pre-defined. For example, one-to-one association may be used as in LTE release 14 V2X.

A sensing term may be configured with respect to resources of a PSCCH and/or a PSSCH. Resource selection based on short term sensing may be configured with respect to resources of a PSCCH and/or a PSSCH.

As illustrated in Fig. 11, a sensing term is configured only with respect to a PSCCH, and a configured or pre-defined timing shift and/or frequency shift is configured with respect to a PSSCH associated with the PSCCH. Resource selection based on short term sensing is performed on PSCCH resources, and the associated PSSCH is selected at the same time. Because a PSCCH occupies less PRBs than a PSSCH in general, an overhead of a sensing unit is decreased.

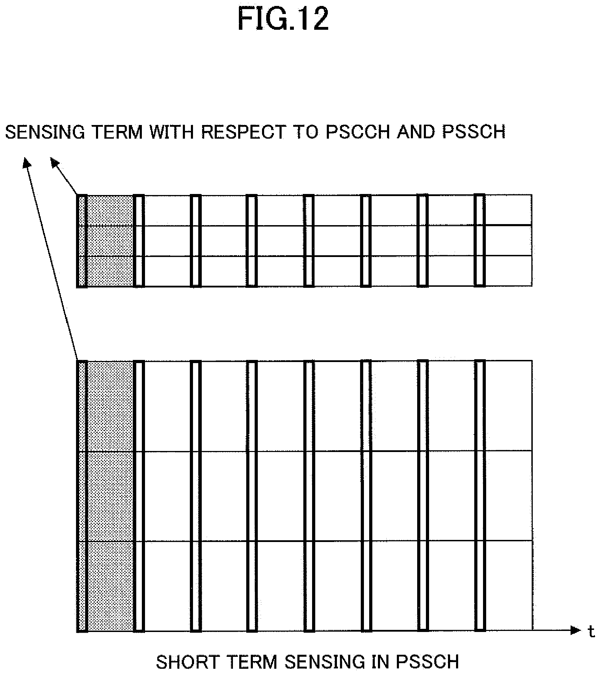

Fig. 12 is a diagram illustrating an example of sensing to a PSSCH in an embodiment of the present invention. As illustrated in Fig. 12, a sensing term is configured with respect to a PSCCH and a PSSCH, and resource selection based on short term sensing is performed independently on PSCCH resources and PSSCH resources, respectively.

According to the implementation described above, the number of user apparatuses 20 that use the same resources in a conflicting manner by the user apparatuses 20 performing resource selection based on short term sensing can be decreased, compared to random selection of resources.

That is, resource conflicts in inter-terminal direct communication can be mitigated.

### <Apparatus Configuration>

Next, functional configuration examples of a base station apparatus 10 and a user apparatus 20 that perform the processing and operations described above will be described. Each of the base station apparatus 10 and the user apparatus 20 includes functions practicing the implementation described above. However, each of the base station apparatus 10 and the user apparatus 20 may alternatively include only some functions in the implementation.

### <Base station apparatus 10>

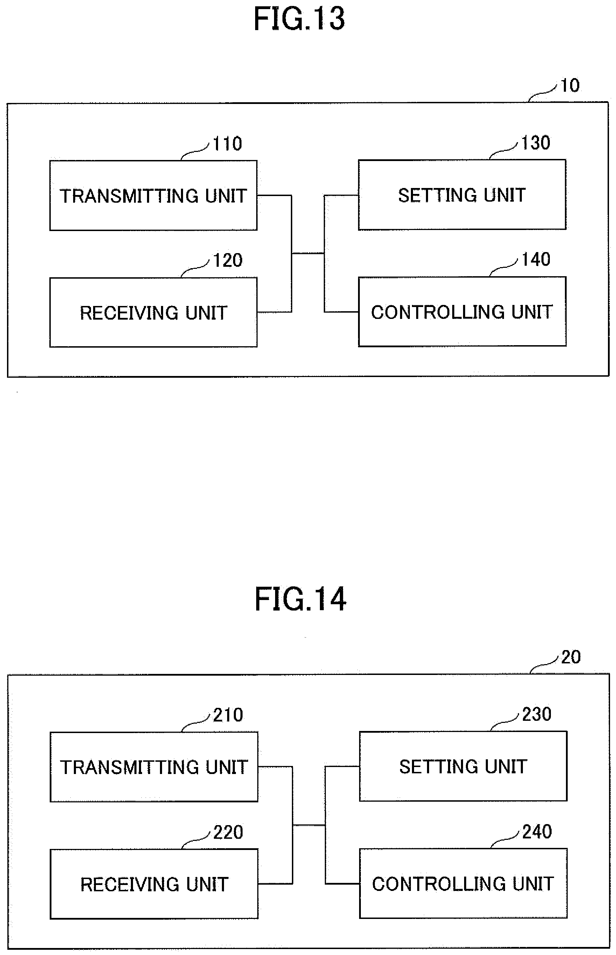

Fig. 13 is a diagram illustrating an example of a functional configuration of a base station apparatus 10. As illustrated in Fig. 13, the base station apparatus 10 includes a transmitting unit 110, a receiving unit 120, a setting unit 130, and a controlling unit 140. The functional configuration illustrated in Fig. 13 is only an example. Division of the functions and names of functional units may be freely determined as long as the operations according to the embodiment of the present invention can be performed.

The transmitting unit 110 includes a function that generates a signal to be transmitted to a user apparatus 20 side and wirelessly transmits the signal. The receiving unit 120 includes a function that receives various signals transmitted from a user apparatus 20, and obtains, for example, information of a higher layer from the received signal. Also, the transmitting unit 110 has a function that transmits NR-PSS, NR-SSS, NR-PBCH, DL/UL control signals and the like to the user apparatus 20. Also, for example, the transmitting unit 110 transmits, to the user apparatus 20, information indicating that another user apparatus is in the vicinity, and the receiving unit 120 receives terminal information from the user apparatus 20.

The setting unit 130 stores pre-set setting information and various pieces of setting information to be transmitted to the user apparatus 20 in a storage device, and reads the information from the storage device as appropriate. Contents of the setting information are, for example, information regarding setting of D2D communication and so on.

The controlling unit 140 performs processing related to setting for the user apparatus 20 to perform D2D communication, as described in the implementation. A functional unit relating to signal transmission in the controlling unit 140 may be included in the transmitting unit 110 and a functional unit relating to signal reception in the controlling unit 140 may be included in the receiving unit 120.

### <User apparatus 20>

Fig. 14 is a diagram illustrating an example of a functional configuration of a user apparatus 20. As illustrated in Fig. 14, the user apparatus 20 includes a transmitting unit 210, a receiving unit 220, a setting unit 230, and a controlling unit 240. The functional configuration illustrated in Fig. 14 is only an example. Division of the functions and names of functional units may be freely determined as long as the operations according to the embodiment of the present invention can be performed.

The transmitting unit 210 generates a transmission signal from transmission data and wirelessly transmits the transmission signal. The receiving unit 220 wirelessly receives various signals and obtains a higher layer signal from the received physical layer signal. Also, the receiving unit 220 has a function that receives NR-PSS, NR-SSS, NR-PBCH, DL/UL/SL control signals and the like transmitted from a base station apparatus 10. Also, for example, the transmitting unit 210 transmits, to another user apparatus 20, a PSCCH (Physical Sidelink Control Channel), PSSCH (Physical Sidelink Shared Channel), PSDCH (Physical Sidelink Discovery Channel), PSBCH (Physical Sidelink Broadcast Channel) or the like as D2D communication, and the receiving unit 120 receives a PSCCH, PSSCH, PSDCH, PSBCH or the like from another user apparatus 20.

The setting unit 230 stores various pieces of setting information received by the receiving unit 220 from the base station apparatus 10 or user apparatus 20 in a storage device, and reads the information from the storage device as appropriate. The setting unit 230 also stores pre-set setting information. Contents of the setting information are, for example, information regarding setting of D2D communication and so on.

The controlling unit 240 controls D2D communication with another user apparatus 20, as described in the implementation. Also, the controlling unit 240 performs processing related to sensing of D2D communication. A functional unit relating to signal transmission in the controlling unit 240 may be included in the transmitting unit 210 and a functional unit relating to signal reception in the controlling unit 240 may be included in the receiving unit 220.

### <Hardware Configuration>

The functional configuration diagrams (Figs. 13 and 14) used in the description of the embodiment of the present invention set forth above illustrate the blocks in the units of functions. These functional blocks (constituent units) are embodied in any combination of hardware and/or software. Means for embodying each functional block is not particularly limited. That is, each functional block may be embodied by one device into which a plurality of elements are physically and/or logically coupled or may be embodied by two or more devices that are physically and/or logically separated and that are connected directly and/or indirectly (for example, in a wired and/or wireless manner).

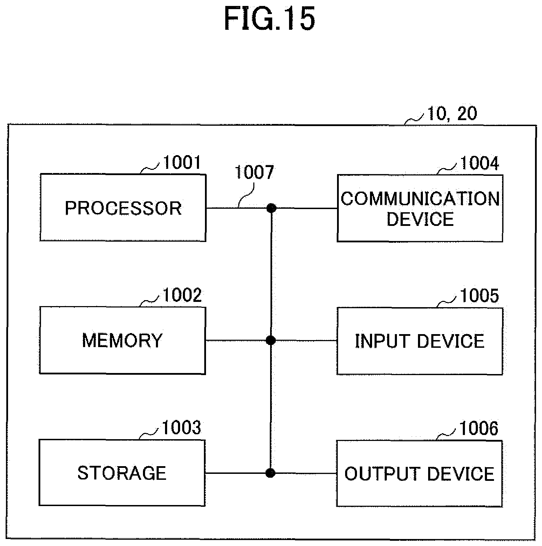

Also, for example, any of a base station apparatus 10 and a user apparatus 20 in an embodiment of the present invention may function as a computer that performs the processing according to the embodiment of the present invention. Fig. 15 is a diagram illustrating an example of a hardware configuration of a radio communication device that is a base station apparatus 10 or a user apparatus 20 according to an embodiment of the present invention. Each of the base station apparatus 10 and the user apparatus 20 described above may be physically configured as a computer device including a processor 1001, a memory 1002, a storage 1003, a communication device 1004, an input device 1005, an output device 1006, a bus 1007, and the like.

In the following description, the term "device" may be interchanged with a circuit, an apparatus, a unit, or the like. The hardware configurations of the base station apparatus 10 and the user apparatus 20 may include one or more devices 1001, one or more devices 1002, one or more devices 1003, one or more devices 1004, one or more devices 1005, and one or more device 1006, or may not include some of the devices.

Each function in the base station apparatus 10 and the user apparatus 20 are realized by causing hardware such as the processor 1001 and the memory 1002 to read predetermined software (program) and causing the processor 1001 to perform computation and to control communication by the communication device 1004 and reading and/or writing of data in the memory 1002 and the storage 1003.

The processor 1001 controls the entire computer, for example, by operating an operating system. The processor 1001 may be constituted by a central processing unit (CPU) including an interface with peripheral devices, a control device, a computation device, a register, and the like.

The processor 1001 reads a program (program codes), a software module, or data from the storage 1003 and/or the communication device 1004 to the memory 1002, and performs various processing operations in accordance therewith. As the program, a program causing a computer to perform at least some of the operations in the embodiment described above is used. For example, the transmitting unit 110, the receiving unit 120, the setting unit 130, and the controlling unit 140 of the base station apparatus 10 illustrated in Fig. 13 may be embodied by a control program that is stored in the memory 1002 and operated by the processor 1001. Also, for example, the transmitting unit 210, the receiving unit 220, the setting unit 230, and the controlling unit 240 of the user apparatus 20 illustrated in Fig. 14 may be embodied by a control program that is stored in the memory 1002 and operated by the processor 1001. Although the various processing operations set forth above have been described as being performed by a single processor 1001, the various processing operations set forth above may be performed simultaneously or sequentially by two or more processors 1001. The processor 1001 may be implemented as one or more chips. The program may be transmitted from a network via an electric communication line.

The memory 1002 is a computer-readable recording medium and may be constituted, for example, by at least one of an ROM (Read Only Memory), an EPROM (Erasable Programmable ROM), an EEPROM (Electrically Erasable Programmable ROM), a RAM (Random Access Memory), and the like. The memory 1002 may be called a register, a cache, or a main memory (a main storage device). The memory 1002 can store a program (program codes), a software module, and the like that can be executed to perform processing operations according to an embodiment of the present invention.

The storage 1003 is a computer-readable recording medium and may be constituted, for example, by at least one of an optical disc such as a CD-ROM (Compact Disc ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, a magnetic strip, and the like. The storage 1003 may be called an auxiliary storage device. The recording medium described above may be a database including the memory 1002 and/or the storage 1003, a server, or another appropriate medium.

The communication device 1004 is hardware (a transceiver device) for performing communication between computers via a wired network and/or a wireless network and is referred to as, for example, a network device, a network controller, a network card, a communication module, or the like. For example, the transmitting unit 110 and the receiving unit 120 of the base station apparatus 10 may be embodied by the communication device 1004. The transmitting unit 210 and the receiving unit 220 of the user apparatus 20 may be embodied by the communication device 1004.

The input device 1005 is an input device (such as, for example, a keyboard, a mouse, a microphone, a switch, a button, a sensor, or the like) that receives an input from the outside. The output device 1006 is an output device (such as, for example, a display, a speaker, an LED lamp, or the like) that performs outputting to the outside. The input device 1005 and the output device 1006 may be configured to be integrated (such as a touch panel).

The devices such as the processor 1001 and the memory 1002 are connected to each other via the bus 1007 for transferring information. The bus 1007 may be constituted by a single bus or may be configured by different buses between the devices.

Each of the base station apparatus 10 and the user apparatus 20 may be configured to include hardware such as a microprocessor, a DSP (Digital Signal Processor), an ASIC (Application Specific Integrated Circuit), a PLD (Programmable Logic Device), an FPGA (Field Programmable Gate Array), or the like, or a part or all of the functional blocks may be embodied by the hardware. For example, the processor 1001 may be implemented as at least one of the above hardware modules.

### <Summary of Embodiment>

As described above, according to the embodiment of the present invention, there is provided a user apparatus performing inter-terminal direct communication, comprising: a receiving unit that performs sensing in a predetermined period located in a beginning portion in a time domain of resource units included in a resource selection window; a controlling unit that selects any of the resource units included in the resource selection window based on a result of the sensing; and a transmitting unit that transmits a signal to another user apparatus using the selected resource unit.

According to the configuration, the number of user apparatuses 20 that use the same resources in a conflicting manner by the user apparatuses 20 performing resource selection based on short term sensing can be decreased, compared to random selection of resources. That is, resource conflicts in inter-terminal direct communication can be mitigated.

Sensing may not be performed on a resource unit that has been already reserved among the resource units included in the resource selection window. According to the configuration, the user apparatus 20 can stop performing sensing on a resource on which sensing does not need to be performed.

The predetermined period located in the beginning portion in the time domain of the resource units may include a plurality of unit periods in which sensing is performed, and wherein the receiving unit may perform sensing using a counter indicating a number of unit periods in which sensing is performed. According to the configuration, the user apparatus 20 can perform communication to which a priority is assigned by controlling the number of sensing units.

The receiving unit may decrease the counter by 1 each time sensing in the unit period is completed, and select a resource unit on which sensing has been performed when no signal has been detected in all the unit periods in which sensing has been performed and the counter becomes 0. According to the configuration, the user apparatus 20 can perform communication to which a priority is assigned by controlling the number of sensing units.

An initial value of the counter before sensing is started may be set to a smaller value in case of a higher PPPP (ProSe Per Packet Priority) or set to a larger value in case of a higher CBR (Channel Busy Ratio). According to the configuration, the user apparatus 20 can perform communication to which a priority is assigned by controlling the number of sensing units depending on the priority.

A reference signal for sensing may be mapped in the unit period located in a beginning portion among resources used for transmission of the selected resource unit. According to the configuration, the user apparatus 20 can start message transmission earlier, and another user apparatus can detect that a resource unit is being used for the transmission.

### <Supplement of Embodiment>

While the embodiments of the present invention have been described above, the disclosed inventions are not limited to the embodiments, but it could be understood by those skilled in the art that various modifications, alterations, alternatives, replacements, and the like can be made thereto. While specific numerical examples have been used to facilitate understanding of the present invention, the numerical values are only examples and any appropriate values may be used, unless otherwise specified. The sorting of articles in the above description is not essential to the present invention, but matters described in two or more articles may be combined for use if necessary, or matters described in one article may be applied to matters described in another article (unless incompatible). The boundaries of the functional units or the processing units in the functional block diagrams do not necessarily correspond to boundaries of physical components. Operations of two or more functional units may be performed physically by a single component or an operation of a single functional unit may be performed physically by two or more components. Regarding the processing procedure described in the embodiment, the order of the processing operations may be changed unless incompatible. For convenience of explanation of the processing, the base station apparatus 10 and the user apparatus 20 have been described using the functional block diagrams, but such devices may be embodied in hardware, software, or a combination thereof. Software operated by the processor of the base station apparatus 10 according to the embodiment of the present invention and software operated by the processor of the user apparatus 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited to the aspects/embodiments described in this specification, but may be performed using other methods. For example, the notification of information may be performed via a physical layer signaling (such as DCI (Downlink Control Information), UCI (Uplink Control Information), or the like), a higher layer signaling (such as an RRC (Radio Resource Control) signaling, a MAC (Medium Access Control) signaling, broadcast information (MIB (Master Information Block), SIB (System Information Block), or the like), other signals, or any combination thereof. The RRC signaling may be called an RRC message and may be, for example, an RRC connection setup message, an RRC connection reconfiguration message, or the like.

The aspects/embodiments described in this specification may be applied to systems utilizing LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or next-generation systems to which the systems are extended.

The processing procedures, sequences, flowcharts, and the like of the aspects/embodiments described in this specification may be changed in the order as long as they are not incompatible with each other. For example, in the method described in this specification, various step elements are presented in an exemplary order, but the method is not limited to the presented order.

The specific operations which are performed by the base station apparatus 10 in this specification may be performed by an upper node thereof in some cases. In a network including one or more network nodes including the base station apparatus 10, it is obvious that various operations which are performed to communicate with the user apparatus 20 can be performed by the base station apparatus 10 and/or another network node (for example, an MME or an S-GW can be considered but the network node is not limited thereto) other than the base station apparatus 10. Although a case where the number of network nodes other than the base station apparatus 10 is one has been illustrated above, a combination of two or more other network nodes (for example, an MME and an S-GW) may be used.

The aspects/embodiments described in this specification may be used alone, may be used in combination, or may be switched with implementation thereof.

The user apparatus 20 may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station apparatus 10 may be called an NB (NodeB), an eNB (enhanced NodeB), a gNB, a base station, or some other appropriate terms by those skilled in the art.

The terms "determining" and "deciding" as used in this specification may include various types of operations. For example, "determining" and "deciding" may include deeming that to perform judging, calculating, computing, processing, deriving, investigating, looking up (e.g., searching in a table, a database, or another data structure), or ascertaining is to perform "determining" or "deciding." Further, "determining" and "deciding" may include deeming that to perform receiving (e.g., reception of information), transmitting (e.g., transmission of information), input, output, or accessing (e.g., accessing data in memory) is to perform "determining" or "deciding." Furthermore, "determining" and "deciding" may include deeming that to perform resolving, selecting, choosing, establishing, or comparing is to perform "determining" or "deciding." That is, "determining" and "deciding" may include deeming that some operation is to perform "determining" or "deciding."

The expression "based on" as used in this specification does not mean only "based on only," unless otherwise specified. That is, the expression "based on" means both "based on" and "based on at least."

As long as the terms "include" and "including" and derivatives thereof are used in this specification or the appended claims, the terms are intended to have a comprehensive meaning similarly to the term "comprising." Further, the term "or" as used in this specification or the appended claims is intended not to mean an exclusive or.

In the entire disclosure, for example, when an article such as a, an, or the is added in translation into English, such an article may include the plural unless otherwise recognized from the context.

In the embodiments of the present invention, the sensing term is an example of a predetermined period located in a beginning portion in a time domain of resource units. The sensing unit is an example of a unit period in which sensing is performed. The sensing timer is an example of a counter.

Although the present invention has been described in detail, it is obvious to those skilled in the art that the present invention is not limited to the embodiments described in this specification. The present invention can be practiced as modifications and alterations without departing from the spirit and scope of the present invention defined by the description in the appended claims. Therefore, the description in this specification is intended to be exemplary and does not have any restrictive meaning to the present invention.

### LIST OF REFERENCE SYMBOLS

- 10: BASE STATION APPARATUS
- 110: TRANSMITTING UNIT
- 120: RECEIVING UNIT
- 130: SETTING UNIT
- 140: CONTROLLING UNIT
- 20: USER APPARATUS
- 210: TRANSMITTING UNIT
- 220: RECEIVING UNIT
- 230: SETTING UNIT
- 240: CONTROLLING UNIT
- 1001: PROCESSOR
- 1002: MEMORY
- 1003: STORAGE
- 1004: COMMUNICATION DEVICE
- 1005: INPUT DEVICE
- 1006: OUTPUT DEVICE

## Claims

1. A user apparatus performing inter-terminal direct communication, comprising:
a receiving unit that performs sensing in a predetermined period located in a beginning portion in a time domain of resource units included in a resource selection window;
a controlling unit that selects any of the resource units included in the resource selection window based on a result of the sensing; and
a transmitting unit that transmits a signal to another user apparatus by using the selected resource unit.

2. The user apparatus as claimed in claim 1, wherein sensing is not performed on a resource unit that has been already reserved among the resource units included in the resource selection window.

3. The user apparatus as claimed in claim 1, wherein the predetermined period located in the beginning portion in the time domain of the resource units includes a plurality of unit periods in which sensing is performed, and wherein the receiving unit performs sensing using a counter indicating a number of unit periods in which sensing is performed.

4. The user apparatus as claimed in claim 3, wherein the receiving unit decreases the counter by 1 each time sensing in the unit period is completed, and selects a resource unit on which sensing has been performed when no signal has been detected in all the unit periods in which sensing has been performed and the counter becomes 0.

5. The user apparatus as claimed in claim 4, wherein an initial value of the counter before sensing is started is set to a smaller value in case of a higher ProSe Per Packet Priority (PPPP) or set to a larger value in case of a higher Channel Busy Ratio (CBR) .

6. The user apparatus as claimed in claim 4, wherein a reference signal for sensing is mapped in the unit period located in a beginning portion among resources used for transmission of the selected resource unit.
